# EUROPEAN PATENT APPLICATION

(11) **EP 4 411 674 A1**
(43) Date of publication of application: **07.08.2024**
(21) Application number: 23154547.6
(22) Date of filing: 01.02.2023
(51) Int. Cl.: G06V 40/10, G06V 10/82, G06V 20/59

(54) **SEATED POSTURE DETECTION**

(71) Applicant: BAE SYSTEMS plc, London SW1Y 5AD (GB)
(72) Inventor: The designation of the inventor has not yet been filed
(74) Representative: BAE SYSTEMS plc Group IP Department

(57) **Abstract**

The present invention relates to seated posture detection, in particular to seated posture detection using machine learning. According to an aspect of the present invention, there is provided a computer-implemented method for performing seated posture detection. The method comprises: receiving an image of a person in a seated posture; generating, using a pose estimator, pose data by processing the image; and classifying the seated posture of the person into a seated posture category of a plurality of seated posture categories, comprising processing the pose data using a machine-learned seated posture classification model.

## Description

### FIELD

The present invention relates to seated posture detection, in particular to seated posture detection using machine learning.

### BACKGROUND

Currently, seated posture assessment is largely performed manually by human assessors. This is impractical for a variety of reasons (e.g. cost and time), particularly if people being assessed are distributed geographically. Automated methods for seated posture assessment may require the use of dedicated equipment (e.g. side cameras that capture a side view), and may also be impractical as correct set-up of the dedicated equipment may be required for consistent results to be obtained.

### SUMMARY

According to an aspect of the present invention, there is provided a computer-implemented method for performing seated posture detection. The method comprises: receiving an image of a person in a seated posture; generating, using a pose estimator, pose data by processing the image; and classifying the seated posture of the person into a seated posture category of a plurality of seated posture categories, comprising processing the pose data using a machine-learned seated posture classification model.

The image may be an image of a frontal view of the person.

The pose data may comprise a representation of a position for each of a plurality of key points. The plurality of key points may comprise one or more joints. The plurality of key points may comprise one or more facial elements. The pose data may comprise an image displaying the positions of the plurality of key points.

The machine-learned seated posture classification model may comprise a convolutional neural network comprising one or more convolutional neural network layers. The machine-learned seated posture classification model may comprise one or more of: a logistic regression model; a neural network model; a support vector machine model; a decision tree model; and a k-nearest neighbours model.

The plurality of seated posture categories may relate to different health implications. The plurality of seated posture categories may comprise a neutral seated posture and one or more unhealthy seated postures. The one or more unhealthy seated postures may comprise a forwards leaning seated posture and a backwards leaning seated posture.

The pose estimator may comprise a machine-learned model.

According to a further aspect of the invention, there is provided a computer program product comprising computer readable instructions that, when executed by a computer, cause the computer to perform the method of any one or more of the methods described herein.

According to a further aspect of the invention, there is provided a system comprising one or more computer-readable storage media comprising instructions, which when executed by one or more processors, implement: a pose estimator; and a machine-learned seated posture classifier, wherein: the pose estimator is configured to: receive an image of a person in a seated posture; and generate pose data by processing the image; and the machine-learned seated posture classifier is configured to: classify the seated posture of the person into a seated posture category of a plurality of seated posture categories by processing the pose data.

The system may further comprise a front-facing camera configured to obtain an image feed of images capturing a frontal view of the person. The pose estimator may be configured to obtain the image from the image feed.

The pose data may comprises a representation of a position for each of a plurality of key points. The plurality of key points may comprise one or more joints. The plurality of key points may comprise one or more facial elements. The pose data may comprise an image displaying the positions of the plurality of key points.

The machine-learned seated posture classification model may comprise a convolutional neural network comprising one or more convolutional neural network layers. The machine-learned seated posture classification model may comprises one or more of: a logistic regression model; a neural network model; a support vector machine model; a decision tree model; and a k-nearest neighbours model.

The plurality of seated posture categories may relate to different health implications. The plurality of seated posture categories may comprise a neutral seated posture and one or more unhealthy seated postures. The one or more unhealthy seated postures may comprise a forwards leaning seated posture and a backwards leaning seated posture.

The pose estimator may comprise a machine-learned model.

### BRIEF DESCRIPTION OF THE FIGURES

Embodiments of the invention will now be described by way of example only with reference to the figures, in which:
Figure 1 shows a schematic overview of an example method for seated posture classification;
Figure 2 shows a schematic overview of another example method for seated posture classification;
Figure 3 shows a schematic overview of an example method for obtaining probabilities for seated posture categories from pose data.
Figure 4 shows a flow diagram of an example method for performing seated posture detection; and
Figure 5 shows a schematic overview of a system/apparatus for performing any of the methods described herein.

### DETAILED DESCRIPTION

This specification describes systems, apparatus and methods for seated posture detection/classification. The seated posture detection techniques described herein use a two-stage process to classify the seated posture of a person from an image. In the first stage, an image of the person in the seated posture is processed using a pose estimator to obtain pose data. The pose data represents the pose of the person in the image, e.g. the relative positioning of joints (e.g. shoulders, elbows, wrists, etc.) and other key points (e.g. facial elements such as eyes, ears, mouths, etc.). In the second stage, the pose data is processed using a machine-learned seated posture classification model (also referred to herein as a seated posture classifier) to obtain a classification of the seated posture of the person in the image.

The automated approach to seated posture detection using the techniques described herein removes many of the obstacles that are present when manually assessing seated posture. The automated approaches described herein can be performed conveniently, quickly, and in any suitable geographical location e.g. by being provided (or otherwise accessed) as part of an application that runs on a computer used by a person being assessed.

Furthermore, accurate results for seated posture classification may be obtained due to the two-stage process used by the techniques described herein. In particular, by configuring the seated posture classifier to process pose data obtained from a pose estimator, undesired variance in classification outputs can be reduced. For example, the seated posture classifier can be robust to scene variance. This means that images of a person sitting in the same seated posture but in different backgrounds are likely to be classified into the same seated posture category by the seated posture classifier. As another example, the seated posture classifier can be robust to variance from geometrical transformations such as translation, rotation, scale, etc. As a result, images of the person in the same seated posture but captured from different angles and/or distances are likely to be classified into the same seated posture category by the seated posture classifier. As another example, the seated posture classifier may be robust to variance of individuals. Put another way, the same seated posture classifier can be used to provide accurate results for different people.

In some embodiments, the image of the person in the seated posture is a frontal view of the person. For example, images of the person in seated postures can be obtained from a camera that is already available to the person (e.g. a webcam of/in communication with a computer the person uses), thereby allowing the techniques described herein to be performed conveniently. Therefore, the techniques described herein can be used to perform seated posture detection/classification without requiring dedicated equipment such as a side camera that capture a side view of the person. This is because the techniques described herein can enable spinal position to be taken into account (e.g. via use of the pose estimator) from only frontal views of the person. Furthermore, the frontal view of the person may only capture a portion of the entire person. For example, the techniques described herein allow seated posture detection to be performed from an image displaying only the head, shoulders, and arms of the person.

As a result of the convenient and accurate seated posture detection enabled by the techniques described herein, seated posture assessment of individuals can be more readily performed thereby minimising the risk of health implications from prolonged sitting in substandard workstation environments.

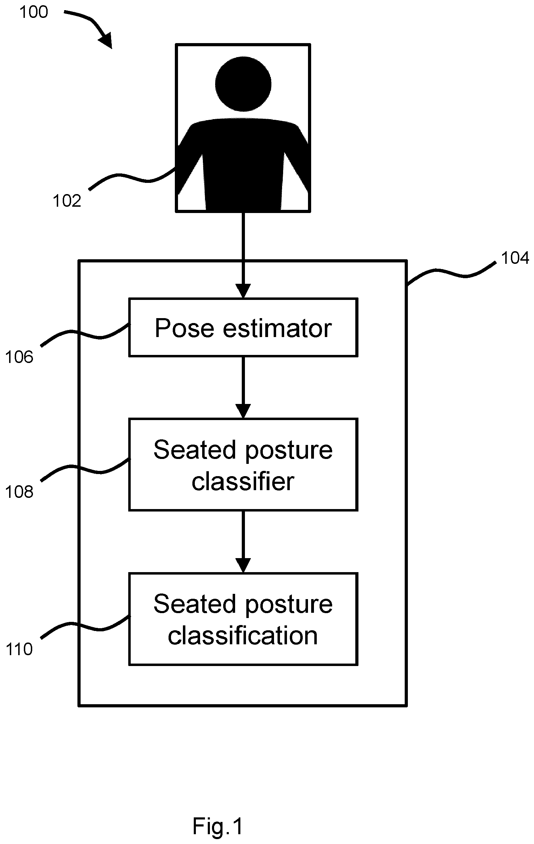

Figure 1 shows a schematic overview of an example method 100 for seated posture classification. The method may be performed by one or more computers operating in one or more locations.

An image 102 of a person in a seated posture is received by a seated posture classification system 104. The image 102 may be of a frontal view of a person. The image 102 may display a portion of the person, e.g. an upper portion of the person. The upper portion of the person may include the torso, shoulders, arms, and the head (or portions thereof) of the person. In some implementations, the image 102 does not display a lower portion of the person (e.g. from below the hips). The image 102 may be pre-processed by the seated posture classification system 104 before input into the pose estimator 106. For example, the image 102 may be constrained to be of a certain size (e.g. so that all images 102 input into the pose estimator are of the same height and width).

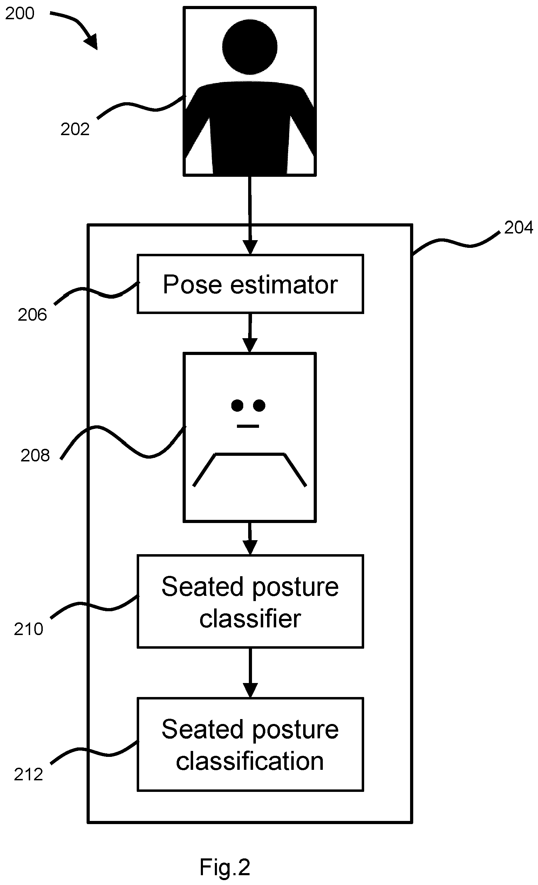

The image 102 is input into a pose estimator 106 of the seated posture classification system 104. The pose estimator 106 processes the image 102 and generates pose data for the image 102. The pose data represents the pose of the person in the image 102. For example, the pose data may represent the relative positioning of various key points. The key points may include joints (e.g. shoulders, wrists, hips, etc.), bones (e.g. clavicles, humeruses, etc.), and/or facial elements (e.g. eyes, ears, nose, mouth, etc.). In some implementations, the pose data comprises a representation of a position for each of a plurality of key points. For example, the pose data 102 may comprise co-ordinates for each of the key points. The co-ordinates may be specified in relation to an origin. The origin may be specified in relation to the image 102 (e.g. the top-left corner of the image may be indicated as the origin), or in relation to one or more key points (e.g. a middle point between two hip points may be indicated as the origin). The co-ordinates may be two-dimensional or three-dimensional (thereby including depth information). In some implementations, the pose estimator 106 may generate pose data representing positions of key points not displayed in the image 102. The pose data may be filtered to remove position information for certain key points (e.g. for key points below the hip). The pose data may represent position information for a fixed set of key points. As a result, for any input image 102, the pose estimator 106 may generate pose data for the same set of key points. As will be described in further detail in relation to Figure 2, in some implementations the pose estimator 106 may be configured to generate pose data in the form of an image that displays the positions of the key points.

The pose estimator 106 is a model that is configured to generate pose data from input images 102. For example, the pose estimator 106 may comprise a machine-learned model that has been trained to generate pose data from input images.

Machine learning methods for extracting skeletal key points from one or more images of a person are known *per* se to those skilled in the art. Generally, the pose estimator 106 may be trained using training examples, wherein each training example comprises an image of a person in a particular pose and corresponding pose data. Different training examples may comprise images of different people in different poses. During training, the images of one or more training examples are processed using current parameter values of the pose estimator 106 and predicted pose data is generated for each of the one or more training examples. The pose estimator 106 may be trained to minimise differences (e.g. Euclidean distance) between predicted pose data (for example in the form of a vector of values representing positions of each of a plurality of predicted key points) and the pose data of the one or more training examples (for example in the form of a vector of values representing positions of each of a plurality of "ground truth" key points). The training may use one or more loss functions (e.g. a regression loss function such as mean-squared error, Euclidean distance, etc.) to update the parameter values of the pose estimator 106. Parameter values of the pose estimator 106 may be updated using any suitable optimisation procedure, including gradient-based methods such as gradient descent, stochastic gradient descent, batch gradient descent, or other well-known techniques. As will be appreciated by those skilled in the art, gradients of the one or more loss functions with respect to the parameters of the pose estimator 106 may be obtained by performing backpropagation.

The pose estimator 106 may comprise a neural network. For example, the pose estimator 106 may comprise a convolutional neural network comprising one or more convolutional neural network layers.

The seated posture classification system 104 may be configured to preprocess the pose data output by the pose estimator 106 before input to the seated posture classifier 108. For example, the pose data may be converted into a suitable format for the seated posture classifier 108. As an example, if the pose data output by the pose estimator 106 specifies co-ordinates for each of a plurality of key points, a vector representation of the pose data may be determined.

The pose data is input to the seated posture classifier 108. The seated posture classifier 108 processes the pose data and generates a seated posture classification 110. The seated posture classification 110 indicates a particular category/class of seated posture from a set of seated posture categories/classes. The different seated posture categories may relate to different health implications, e.g. from prolonged sitting in the seated posture. The set of seated posture categories may include a neutral/healthy seated posture and one or more unhealthy seated postures. The neutral/healthy seated posture may represent an "ideal" seated posture that is recommended for prolonged sitting that minimises health implications (e.g. back pain, neck pain, shoulder pain, etc.). The one or more unhealthy seated postures may represent seated postures that (substantially) differ from the neutral/healthy seated posture, thereby representing a poor seated posture. The one or more unhealthy seated postures may include a forwards leaning seated posture and/or a backwards leaning posture. A forwards leaning seated posture may indicate that an angle between the hips and spine is too low, e.g. substantially lower than 90-110 degrees. A backwards leaning seated posture may indicate that an angle between the hips and spine is too high, e.g. substantially greater than 90-110 degrees. The one or more unhealthy seated postures may include a forwards neck tilt seated posture and/or a backwards neck tilt seated posture. Any suitable unhealthy seated posture may be included in the set of unhealthy seated postures.

The seated posture classification 110 may be obtained in any suitable manner. For example, the seated posture classifier 108 may generate a score/probability for each category of seated posture categories. A seated posture classification 110 may be obtained from the scores/probabilities, e.g. by selecting the seated posture category with the highest score/probability.

The seated posture classifier 108 comprises a machine-learned model that has been trained to generate seated posture classifications 110 from pose data. The seated posture classifier 108 may be trained using training examples, wherein each training example comprises pose data of a particular seated pose and a corresponding seated posture classification. Pose data may be obtained in any suitable manner. For example, images of people sitting in different seated postures (corresponding to different seated posture classes/categories) may be processed by pose estimator 106 to obtain pose data for the images. Each example of pose data may be annotated/labelled with the corresponding seated posture classification. Different training examples may comprise pose data of different seated poses. A portion of the collected pose data may be reserved to form test examples for assessing the performance of the trained seated posture classifier. During training, the pose data of one or more training examples are processed using current parameter values of the seated posture classifier 108 and a predicted seated posture classification is generated for each of the one or more training examples. The seated posture classifier 108 may be trained to minimise differences in predicted seated posture classifications and the seated posture classifications of the one or more training examples. The training may use one or more loss functions (e.g. a classification loss function such as cross-entropy loss, negative log likelihood, etc.) to update the parameter values of the seated posture classifier 108. Parameter values of the seated posture classifier 108 may be updated using any suitable optimisation procedure, including gradient-based methods such as gradient descent, stochastic gradient descent, batch gradient descent, or other well-known techniques. As will be appreciated by those skilled in the art, gradients of the one or more loss functions with respect to the parameters of the seated posture classifier 108 may be obtained by performing backpropagation.

The seated posture classifier 108 may comprise any appropriate machine-learned model. For example, the seated posture classifier 108 may comprise one or more of: a logistic regression model, a neural network model, a support vector machine model, a decision tree model, a k-nearest neighbours model, and/or any other machine-learned model. Ensemble techniques may be used to generate an overall seated posture classification 110 from seated posture classifications generated by a plurality of machine-learned models.

The method 100 may be performed by a computer used by a user whose seated posture is being assessed. For example, the computer may execute an application configured to perform the method 100. The method 100 may be performed periodically e.g. to assess the seated posture of the user over a period of time. Seated posture classifications 110 may be used to determine whether adjustments should be made in the user's workstation, e.g. to improve ergonomics and minimise the risk of health implications.

Figure 2 shows a schematic overview of another example method 200 for seated posture classification, similar to the method described in relation to Figure 1.

An image 202 of a person in a seated posture is received by a seated posture classification system 204. The image 202 is input to a pose estimator 206. The pose estimator 206 process the image 202 and generates pose data 208.

In the example method 200 illustrated in Figure 2, the pose estimator 206 generates pose data in the form of an image 208. The image 208 displays the position of each key point of a plurality of key points. The key points may include joints (e.g. shoulders, wrists, hips, etc.), bones (e.g. collarbones, humeruses, etc.), and/or facial elements (e.g. eyes, ears, nose, mouth, etc.). In the image 208 illustrated in Figure 2, the key points include facial elements (eyes and mouth), bones (clavicles), and joints (shoulders).

The image 208 representing pose data may be of the same size (i.e. height and width) and/or aspect ratio as the input image 202. The image 208 may comprise pixels with binary values indicating the presence or absence of a key point in each pixel location. Alternatively, the image 208 may comprise pixels with a greater range of values. For example, each different key point may be represented by a different integer value in the image 208, e.g. pixel locations corresponding to a mouth key point may share one integer value, whereas pixel locations corresponding to a shoulder key point may share another integer value. As another example, depth information of key points may be represented by the pixel values. In some implementations, the image 208 representing pose data only displays information relating to the key points, e.g. without including any of the background or other scene information in the input image 202. This may be achieved as part of a processing step performed on outputs generated by the pose estimator 206. For example, the pose estimator 206 may generate an output as a layered image comprising a first layer displaying the original input image 202, and a second layer displaying pixel locations of key points. This layered image may be processed to remove the first layer displaying the input image 202, thereby providing image 208 displaying information only relating to key points. Using images 208 only displaying information relating to the key points may improve the robustness of the seated posture classifier 210.

The image 208 representing pose data may be pre-processed by the seated posture classification system 204 before input to the seated posture classifier 210. For example, the image 208 may be cropped and/or scaled down to be of a smaller size/resolution. This pre-processing may also be performed for images 208 used for training the seated posture classifier 210. Using images 208 of a smaller size/resolution may lead to faster inference and training times for the seated posture classifier 210 without degradation in classification accuracy due to the relatively simple features displayed in images 208 representing pose data.

A seated posture classifier 210 receives the image 208 representing the pose data. The seated posture classifier 210 processes the image 208 and generates a seated posture classification 212.

In some implementations, the seated posture classifier 210 comprises a convolutional neural network comprising one or more convolutional layers. Additionally or alternatively, the seated posture classifier 210 may comprise one or more of: a logistic regression model, a neural network model, a support vector machine model, a decision tree model, a k-nearest neighbours model, and/or any other machine-learned model. Ensemble techniques may be used to generate an overall seated posture classification 212 from seated posture classifications generated by a plurality of machine-learned models.

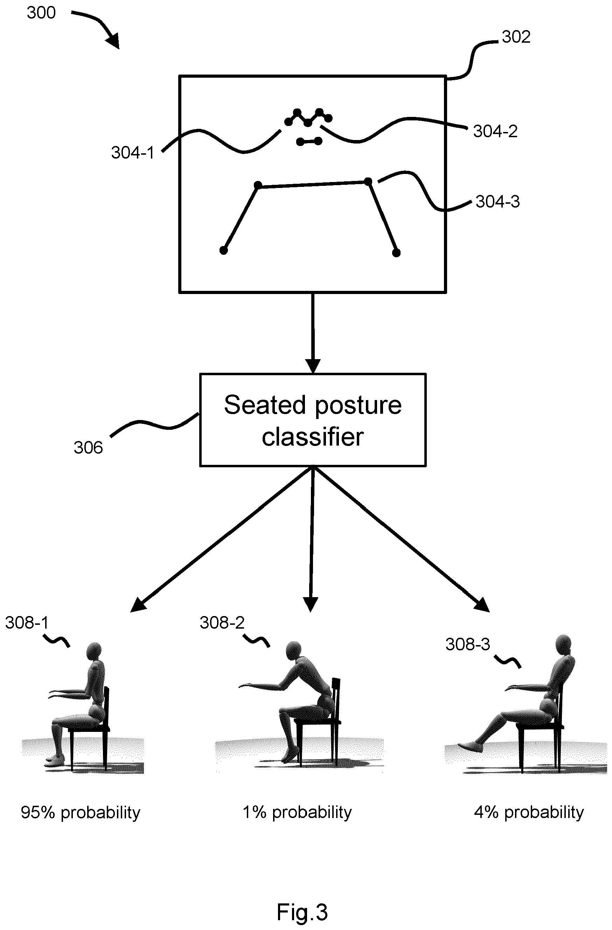

Figure 3 shows a schematic overview of an example method 300 for obtaining probabilities for seated posture categories 308 from pose data 302 as described in relation to Figures 1 and 2. Similar to the method described in relation to Figure 2, the example method 300 uses pose data that is in the form of an image 302.

The image 302 displays the positions of key points 304. For example, key point 304-1 corresponds to a left ear key point, key point 304-2 corresponds to a nose key point, and key point 304-3 corresponds to a right shoulder key point 304-3. For illustrative purposes, not all of the key points 304 of the image 302 are labelled in Figure 3.

The seated posture classifier 306 processes the image 302 representing pose data and generates a probability for each seated posture category 308 of a plurality of seated posture categories 308. In the example illustrated in Figure 3, the seated posture classifier 306 generates a 95% probability for a neutral/healthy seated posture 308-1, a 1% probability for a leaning forwards seated posture 308-2, and a 4% probability for a leaning backwards seated posture 308-2. Furthermore, the example shown in Figure 3 shows three different seated posture categories, although it will be appreciated that a lower or greater number of seated posture categories may be provided.

A seated posture classification may be obtained from the probabilities generated for the seated posture categories 308. For example, a seated posture category 308 with the highest probability may be selected as the seated posture classification. In the example shown in Figure 3, this means that the neutral seated posture 308-1 is selected as the seated posture classification.

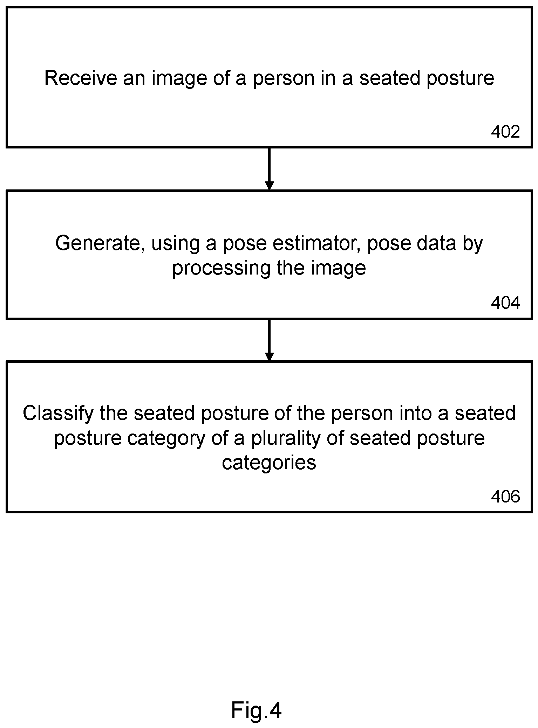

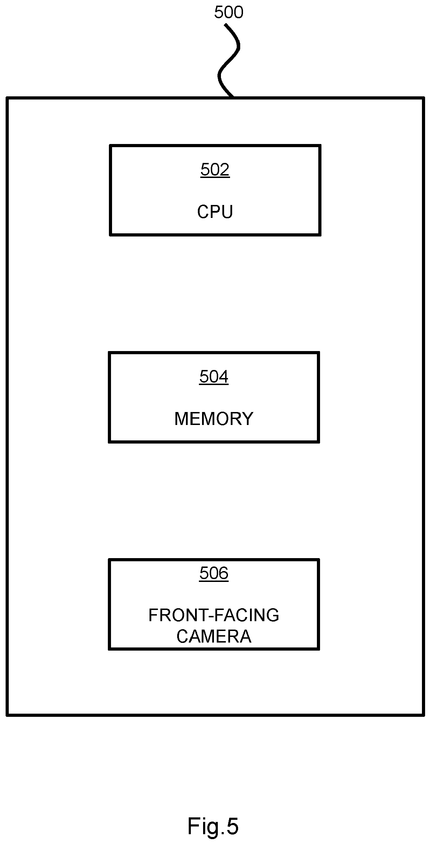

Figure 4 shows a flow diagram of an example method for performing seated posture detection. The method may be performed by a computing system, such as the system described in relation to Figure 5. The method corresponds to the methods described above in relation to Figures 1-2.

At operation 402, an image of a person in a seated posture is received. The image may be an image of a frontal view of the person.

At operation 404, using a pose estimator, pose data is generated by processing the image. The pose data may comprise a representation of a position for each of a plurality of key points. The plurality of key points may comprise one or more joints. Additionally or alternatively, the plurality of key points comprise one or more facial elements. The pose estimator may comprise a machine-learned model.

At operation 406, the seated posture of the person is classified into a seated posture category of a plurality of seated posture categories. This comprises processing the pose data using a machine-learned seated posture classification model. The machine-learned seated posture classification model may comprise one or more of: a logistic regression model; a neural network model; a support vector machine model; a decision tree model; and a k-nearest neighbours model.

In some implementations, the pose data comprises an image displaying the positions of the plurality of key points. In these implementations, the machine-learned seated posture classification model may comprise a convolutional neural network comprising one or more convolutional neural network layers. Additionally or alternatively, the machine-learned seated posture classification model may comprise one or more of: a logistic regression model; a neural network model; a support vector machine model; a decision tree model; and a k-nearest neighbours model.

The plurality of seated posture categories may relate to different health implications. The plurality of seated posture categories may comprise a neutral seated posture and one or more unhealthy seated postures. The one or more unhealthy seated postures may comprise a forwards leaning seated posture and a backwards leaning seated posture.

Figure 5 shows a schematic overview of a system/apparatus 500 for performing any of the methods described herein. The system/apparatus 500 may be a distributed system.

The apparatus (or system) 500 comprises one or more processors 502. The one or more processors control operation of other components of the system/apparatus 500. The one or more processors 502 may, for example, comprise a general-purpose processor. The one or more processors 502 may be a single core device or a multiple core device. The one or more processors 502 may comprise a Central Processing Unit (CPU) or a graphical processing unit (GPU). Alternatively, the one or more processors 502 may comprise specialised processing hardware, for instance a RISC processor or programmable hardware with embedded firmware. Multiple processors may be included.

The system/apparatus comprises a memory 504. The memory 504 may comprise a working or volatile memory. The one or more processors may access the volatile memory in order to process data and may control the storage of data in memory. The volatile memory may comprise RAM of any type, for example Static RAM (SRAM), Dynamic RAM (DRAM), or it may comprise Flash memory, such as an SD-Card.

The memory 504 may further comprise a non-volatile memory. The non-volatile memory stores a set of operating instructions for controlling the operation of the processors 502 in the form of computer readable instructions. The non-volatile memory may be a memory of any kind such as a Read Only Memory (ROM), a Flash memory or a magnetic drive memory.

The one or more processors 502 are configured to execute operating instructions to cause the system/apparatus to perform any of the methods described herein. The operating instructions may comprise code (i.e. drivers) relating to the hardware components of the system/apparatus 500, as well as code relating to the basic operation of the system/apparatus 500. Generally speaking, the one or more processors 502 execute one or more instructions of the operating instructions, which are stored permanently or semi-permanently in the non-volatile memory, using the volatile memory to store temporarily data generated during execution of said operating instructions.

The system/apparatus comprises a front-facing camera 506. The front-facing camera is configured to obtain an image feed of images capturing a frontal view of a user of the system/apparatus 500. The operating instructions may include instructions which when executed by the one or more processors 502 cause the one or more processors 502 to control the front-facing camera 506 to capture images. Captured images may be stored in memory 504, e.g. in non-volatile memory.

Implementations of the methods described herein may be realised as in digital electronic circuitry, integrated circuitry, specially designed ASICs (application specific integrated circuits), computer hardware, firmware, software, and/or combinations thereof. These may include computer program products (such as software stored on e.g. magnetic discs, optical disks, memory, Programmable Logic Devices) comprising computer readable instructions that, when executed by a computer, such as that described in relation to Figure 5, cause the computer to perform one or more of the methods described herein.

Any system feature as described herein may also be provided as a method feature, and vice versa. As used herein, means plus function features may be expressed alternatively in terms of their corresponding structure. In particular, method aspects may be applied to system aspects, and vice versa.

Furthermore, any, some and/or all features in one aspect can be applied to any, some and/or all features in any other aspect, in any appropriate combination. It should also be appreciated that particular combinations of the various features described and defined in any aspects of the invention can be implemented and/or supplied and/or used independently.

Although several embodiments have been shown and described, it would be appreciated by those skilled in the art that changes may be made in these embodiments without departing from the principles of this disclosure, the scope of which is defined in the claims.

## Claims

1. A computer-implemented method for performing seated posture detection, the method comprising:
receiving (402) an image (102) of a person in a seated posture;
generating (404), using a pose estimator (106), pose data by processing the image (102); and
classifying (406) the seated posture of the person into a seated posture category (110) of a plurality of seated posture categories (308), comprising processing the pose data using a machine-learned seated posture classification model (108).

2. The method of claim 1, wherein the image (102) is an image of a frontal view of the person.

3. The method of any preceding claim, wherein the pose data comprises a representation of a position for each of a plurality of key points (304).

4. The method of claim 3, wherein the plurality of key points (304) comprise one or more joints.

5. The method of any one of claims 3 or 4, wherein the plurality of key points (304) comprise one or more facial elements.

6. The method of any one of claims 3 to 5, wherein the pose data comprises an image (208) displaying the positions of the plurality of key points (304).

7. The method of claim 6, wherein the machine-learned seated posture classification model (110) comprises a convolutional neural network comprising one or more convolutional neural network layers.

8. The method of any one of claims 1 to 6, wherein the machine-learned seated posture classification model (110) comprises one or more of:
a logistic regression model;
a neural network model;
a support vector machine model;
a decision tree model; and
a k-nearest neighbours model.

9. The method of any preceding claim, wherein the plurality of seated posture categories (308) relate to different health implications.

10. The method of any preceding claim, wherein the plurality of seated posture categories (308) comprise a neutral seated posture (308-1) and one or more unhealthy seated postures (308-2, 308-3).

11. The method of claim 10, wherein the one or more unhealthy seated postures comprise a forwards leaning seated posture (308-2) and a backwards leaning seated posture (308-3).

12. The method of any preceding claim, wherein the pose estimator (106) comprises a machine-learned model.

13. A computer program product comprising computer readable instructions that, when executed by one or more computing devices, cause the one or more computing devices to perform the method of any preceding claim.

14. A system comprising one or more computer-readable storage media comprising instructions, which when executed by one or more processors, implement:
a pose estimator (106); and
a machine-learned seated posture classifier (108), wherein:
the pose estimator (106) is configured to:
receive (402) an image (102) of a person in a seated posture; and
generate (404) pose data by processing the image (102); and
the machine-learned seated posture classifier (108) is configured to:
classify (406) the seated posture of the person into a seated posture category (110) of a plurality of seated posture categories (308) by processing the pose data.

15. The system of claim 14, further comprising a front-facing camera configured to obtain an image feed of images (102) capturing a frontal view of the person, and wherein the pose estimator is configured to obtain the image (102) from the image feed.
